# EUROPÄISCHE PATENTANMELDUNG

(11) **EP 4 674 681 A1**
(43) Veröffentlichungstag der Anmeldung: **07.01.2026**
(21) Anmeldenummer: 25178487.2
(22) Anmeldetag: 23.05.2025
(51) Int. Cl.: B60N 2/24, B61D 33/00

(54) **SITZANORDNUNG**

(30) Priorität: 02.07.2024 DE 102024206178
(71) Anmelder: Siemens Mobility GmbH, 80997 München (DE)
(72) Erfinder: Schiefer, Benno, 40233 Düsseldorf (DE)
(74) Vertreter: Siemens Patent Attorneys

(57) **Zusammenfassung**

Die Erfindung betrifft eine Sitzanordnung 10, insbesondere für ein Fahrzeug des Personentransports 1, umfassend zumindest einen Sitz 200 und eine Tragarmanordnung 100, wobei die Tragarmanordnung 100 zumindest eine erste Wandhalterung 110 und zumindest einen Tragarm 120 aufweist, wobei die zumindest eine erste Wandhalterung 110 ein Anbindungselement 112 zur Anbindung der ersten Wandhalterung 110 an einer Wand 2 aufweist, wobei die zumindest eine erste Wandhalterung 110 und der Tragarm 120 über eine zumindest eine Achse 150 miteinander verbunden sind.

## Beschreibung

Die Erfindung betrifft eine Sitzanordnung, insbesondere für ein Fahrzeug des Personentransports, umfassend zumindest einen Sitz und eine Tragarmanordnung, wobei die Tragarmanordnung zumindest eine erste Wandhalterung und zumindest einen Tragarm aufweist, wobei die zumindest eine erste Wandhalterung ein Anbindungselement zur Anbindung der ersten Wandhalterung an einer Wand aufweist.

Ferner betrifft die Erfindung ein Fahrzeug des Personentransports, umfassend zumindest eine solche oder wie nachfolgend beschrieben, weitergebildete Sitzanordnung.

Solche Sitzanordnungen kommen üblicherweise bei Commuterbahnen, Regionalbahnen oder S-Bahnen, zum Einsatz und sind speziell an die Bedürfnisse solcher Bahnen angepasst.

Das Dokument EP 3 676 150 B1 betrifft eine gattungsgemäße Sitzanordnung. Diese ist modular aufgebaut, weist jedoch aufgrund der verwendeten Konstruktion ein verhältnismäßig hohes Gewicht auf.

Die bekannten Sitzanordnungen sind häufig schwer, benötigen eine zusätzliche Abstützung zur Seitenwand und sind stets Unikate für ein spezielles Fahrzeug. Bei bisherigen Neufahrzeugen sind fast immer Anpassungen an der Sitzanbindungsstruktur erforderlich oder der Rohbau musste sich an der betreffenden, vorliegenden Anbindungsstruktur orientieren.

Ausgehend davon liegt der Erfindung die Aufgabe zugrunde eine Sitzanordnung bereitzustellen, die ein geringeres Gewicht und eine größere Flexibilität aufweist.

Diese Aufgabe wird durch die Sitzanordnung des Anspruchs 1 und das Fahrzeug des Anspruchs 14 gelöst.

Vorteilhafte Ausgestaltungen und Weiterbildungen sind Gegenstand der jeweiligen Unteransprüche.

Erfindungsgemäß wird eine Sitzanordnung, insbesondere für ein Fahrzeug des Personentransports, bereitgestellt, umfassend zumindest einen Sitz und eine Tragarmanordnung, wobei die Tragarmanordnung zumindest eine erste Wandhalterung und zumindest einen Tragarm aufweist, wobei die zumindest eine erste Wandhalterung ein Anbindungselement zur Anbindung der ersten Wandhalterung an einer Wand aufweist. Die zumindest eine erste Wandhalterung und der Tragarm sind über zumindest eine Achse miteinander verbunden sind.

Bei der Sitzanordnung handelt es sich insbesondere um eine Sitzanordnung für ein Fahrzeug des Personentransports.

Bei der Wand handelt es sich vorzugsweise um eine Seitenwand.

Bei der zumindest einen Achse handelt es sich vorzugsweise um eine Hohlachse.

Erfindungsgemäß wird ferner ein Fahrzeug des Personentransports bereitgestellt, umfassend zumindest eine solche oder wie nachfolgend beschrieben, weitergebildete Sitzanordnung.

In Ausgestaltung ist die Sitzanordnung als Cantilever-Anordnung ausgebildet.

Erfindungsgemäß wird eine Sitzanordnung mit einem modularen Aufbau bereitgestellt, die eine einfache Austauschbarkeit, eine größere Erweiterbarkeit und eine höhere Flexibilität gewährleistet.

Die erfindungsgemäße Bauweise ermöglicht einen schnellen Tausch der Sitzanordnung und/oder der Tragarmanordnung, ohne dass die zumindest eine erste Wandhalterung abgeschraubt werden muss. Es reicht aus, wenn die zumindest eine erste Achse und die zumindest eine erste Wandhalterung entkoppelt werden. Dieses System erlaubt zudem unterschiedliche Anbindungsformationen mit angebundenen ersten Wandhalterungen bereitzustellen.

Hierdurch wird eine flexible, leicht an unterschiedliche Fahrzeugtypen anpassbare Sitzanordnung bereitgestellt, die sich aus gleichbleibenden Komponenten ausbilden lässt. Die erfindungsgemäße Sitzanordnung kann für Einzel, Doppel- oder Vierersitze verwendet werden. Die erfindungsgemäße Sitzanordnung ist leichter und kostengünstiger ausgebildet als bekannte Sitzanordnungen.

Des Weiteren wird erfindungsgemäß eine hohe Flexibilität bei der Anbindung an eine Wand, insbesondere eine Seitenwand, eines Fahrzeugs erreicht.

Zudem wird eine vereinfachte Montage und Demontage im laufenden Betrieb oder bei Erstmontage erreicht.

Ferner wird durch die erfindungsgemäße Sitzanordnung ein verbessertes Design und ein verbesserter Toleranzausgleich bereitgestellt.

Zum Personentransport geeignete Fahrzeuge sind spezifisch an den Personentransport angepasst.

In Ausgestaltung ist die erste Wandhalterung als Anbindungspratzen ausgebildet.

In Ausgestaltung der Sitzanordnung kann vorgesehen sein, dass die zumindest eine erste Wandhalterung zumindest eine erste Buchse aufweist, welche über die Achse mit dem Tragarm verbunden ist.

Hierdurch wird eine Aufnahme bereitgestellt, welche die Achse in der Wandhalterung aufnehmen kann, sodass eine schnelle Demontage der Wandhalterung bzw. der Achse und damit der Sitzanordnung, möglich ist.

In Ausgestaltung der Sitzanordnung kann vorgesehen sein, dass der Tragarm zumindest eine zweite Buchse aufweist, welche über die zumindest eine Achse mit der ersten Wandhalterung verbunden ist.

Hierdurch wird eine Aufnahme bereitgestellt, welche die Achse im Tragarm auf einfache Art und Weise aufnehmen kann, sodass eine schnelle Demontage der Achse und damit der Sitzanordnung, möglich ist.

In Ausgestaltung der Sitzanordnung kann vorgesehen sein, dass die zumindest eine erste Buchse und/oder die zumindest eine zweite Buchse auf der zumindest einen Achse gelagert sind und der Tragarm um die zumindest eine Achse schwenkbar ausgebildet ist.

In Ausgestaltung der Sitzanordnung kann vorgesehen sein, dass der Tragarm die zumindest eine Achse umfasst.

Durch die Integration der Achse in den Tragarm ist es möglich, dass insgesamt weniger Bauteile benötigt werden, um eine Sitzanordnung bereitzustellen. Eine einfache Demontage der zumindest einen ersten Wandhalterung von der Achse ist durch Verschieben der zumindest einen ersten Wandhalterung möglich.

Alternativ zur Integration der Achse in den Tragarm kann vorgesehen sein, dass die Achse separat von dem Tragarm ausgebildet ist. Dies erlaubt eine größere Flexibilität.

In Ausgestaltung der Sitzanordnung kann vorgesehen sein, dass die Sitzanordnung zumindest ein Sitzbefestigungselement aufweist, an dem der zumindest eine Sitz, befestigt ist, wobei das zumindest eine Sitzbefestigungselement mit dem Tragarm verbunden ist.

Durch Bereitstellung des Sitzbefestigungselements wird ein Bauteil des Tragarms angegeben, das es erlaubt, den zumindest einen Sitz nicht unmittelbar am Tragarm, sondern am Sitzbefestigungselement zu befestigen. Das Sitzbefestigungselement kann dabei individuell an den Sitz angepasst sein, kann dabei allerdings hinsichtlich seines Aufbaus, der zur Befestigung am Tragarm vorgesehen ist, gleichbleibend ausgestaltet sein.

Ferner wird hierdurch eine modulare Gestaltung gewährleistet.

In Ausgestaltung der Sitzanordnung kann vorgesehen sein, dass das zumindest eine Sitzbefestigungselement zumindest einen Auflageabschnitt aufweist, an welchem der zumindest eine Sitz befestigt ist und der Auflageabschnitt vorzugsweise eine Einstellvorrichtung aufweist, zur Einstellung eines Abstands zwischen dem Tragarm und dem zumindest einen Sitz.

Hierdurch wird ein Bereich des zumindest einen Sitzbefestigungselements definiert, der speziell dazu ausgebildet ist, den Sitz aufzunehmen. Es ist möglich, dass dieser die Art oder Form des Sitzes spezifisch angepasst ist.

Die Konstruktion des Tragarms bleibt, bei einer spezifischen Anpassung des Auflageabschnitts, jedoch unverändert.

Durch die Einstellvorrichtung ist es möglich, dass die Sitze in der Höhe einstellbar sind. Ungenauigkeiten und Toleranzen können so ausgeglichen werden.

In Ausgestaltung der Sitzanordnung kann vorgesehen sein, dass sich der zumindest eine Auflageabschnitt parallel zu der zumindest einen Achse erstreckt.

Hierdurch wird eine bessere Montierbarkeit des Sitzes gewährleistet.

In Ausgestaltung der Sitzanordnung kann vorgesehen sein, dass sich der zumindest eine Auflageabschnitt quer zur Längsrichtung des Tragarms einseitig und/oder beidseitig erstreckt.

Hierdurch ist es möglich, flexibel das passende Sitzbefestigungselement vorzusehen, je nachdem ob ein Einzelsitz, ein Doppelsitz oder ein Vierersitz (z.B. zwei Doppelsitze) durch den Tragarm getragen werden soll.

In Ausgestaltung der Sitzanordnung kann vorgesehen sein, dass die Tragarmanordnung ein Stützelement zum Stützen des Tragarms aufweist, wobei das Stützelement eine zweite Wandhalterung aufweist und die Wandhalterung vorzugsweise über einen Bolzen mit dem Stützelement verbunden ist.

Durch das Bereitstellen des Stützelements wird erreicht, dass die Tragarmanordnung der Sitzanordnung gestützt wird. Eine verbesserte Stabilität wird hierdurch erreicht. Durch das Bereitstellen eines Bolzens zur Verbindung der Wandhalterung mit dem Stützelement wird zudem eine einfache Montage erreicht.

In Ausgestaltung der Sitzanordnung kann vorgesehen sein, dass die Tragarmanordnung ein Einstellelement aufweist, wobei das Einstellelement zwischen dem Stützelement und der zweiten Wandhalterung angeordnet ist und vorzugsweise das Einstellelement zu Einstellung einer Stützlänge zwischen dem Tragarm und der zweiten Wandhalterung ausgebildet ist.

Durch das Bereitstellen eines Einstellelements, dass zwischen Stützelements und der zweiten Wandhalterung angeordnet ist, kann die stützende Wirkung des Stützelements in Bezug auf die Tragarmanordnung der Sitzanordnung eingestellt werden.

Durch das Einstellelement ist es möglich die Sitzanordnung horizontal auszurichten, wenn Rohbautoleranzen bspw. an der Wand dem entgegenstehen.

Hierdurch ist eine flexible Einstellung möglich und die Tragarmanordnung kann beim Betrieb oder bei der Wartung leicht eingestellt werden.

In Ausgestaltung der Sitzanordnung kann vorgesehen sein, dass der Tragarm im Wesentlichen U-förmig ausgebildet ist und zwei Schenkel aufweist, wobei an den freien Enden der Schenkel in einem Winkel von 0 bis 25°, vorzugsweise von 0 bis 15°, von einer Achsnormalen der Achse in Richtung des Tragarms abweichen.

Hierdurch wird eine große Abstütztbreite im Bereich der Anbindung an die Wand durch den Tragarm bereitgestellt, wohingegen der Tragarm an seinem freien Ende, schmaler ausgebildet ist.

In Ausgestaltung der Sitzanordnung kann vorgesehen sein, dass der Tragarm einen sechseckigen Querschnitt aufweist und/oder der Tragarm innere Stützwände aufweist z.B. in einer Ausführung als Strangpressprofil.

Hierdurch wird eine optimierte Lastverteilung (durch ein optimiertes Flächenträgheitsmoment) erreicht, bei einer überaus ansprechenden Optik.

Es kann ferner vorgesehen sein, dass der Tragarm einen Hohlquerschnitt aufweist.

Durch die Ausbildung eines Tragarms mit Hohlquerschnitt ist es möglich, Gewicht einzusparen.

In Ausgestaltung der Sitzanordnung kann vorgesehen sein, dass die Sitzanordnung derart ausgebildet ist, dass durch Demontage der Achse, der Tragarm der Sitzanordnung von der Wand lösbar ist.

Es kann vorgesehen sein, dass der Tragarm im Profil mitgepresste C-Schienenschlitze aufweist zwecks Einstellung von Sitzlage und Sitzhöhe.

Das Fahrzeug ist vorzugsweise ein spurgeführtes Fahrzeug.

Bei dem spurgeführten Fahrzeug handelt es sich beispielsweise um ein Schienenfahrzeug oder eine Magnetschwebebahn, vorzugsweise zum Personentransport.

Vorzugsweise handelt es sich bei dem Schienenfahrzeug um eine Commuterbahn, eine Regionalbahn oder eine S-Bahn.

Nachfolgend soll die Erfindung anhand mehrerer Ausführungsformen mit Bezug auf die Zeichnungen erläutert werden.

Es zeigt:
- Fig. 1: eine schematische perspektivische Darstellung einer erfindungsgemäßen Sitzanordnung gemäß einer ersten Ausführungsform;
- Fig. 2: eine schematische perspektivische Explosionsdarstellung der erfindungsgemäßen Sitzanordnung gemäß der ersten Ausführungsform;
- Fig. 3: eine schematische perspektivische Darstellung einer Tragarmanordnung einer erfindungsgemäßen Sitzanordnung gemäß der ersten Ausführungsform;
- Fig. 4: eine schematische perspektivische Explosionsdarstellung der Tragarmanordnung der erfindungsgemäßen Sitzanordnung gemäß der ersten Ausführungsform;
- Fig. 5: eine schematische perspektivische Darstellung der erfindungsgemäßen Sitzanordnung gemäß der ersten Ausführungsform;
- Fig. 6: eine schematische perspektivische Darstellung der erfindungsgemäßen Sitzanordnung gemäß der ersten Ausführungsform;
- Fig. 7: eine schematische perspektivische Darstellung einer Tragarmanordnung einer erfindungsgemäßen Sitzanordnung gemäß einer zweiten Ausführungsform;
- Fig. 8: eine schematische perspektivische Darstellung einer Tragarmanordnung einer erfindungsgemäßen Sitzanordnung gemäß einer dritten Ausführungsform;
- Fig. 9: eine schematische perspektivische Darstellung einer erfindungsgemäßen Sitzanordnung gemäß einer vierten Ausführungsform;
- Fig. 10: eine schematische perspektivische Darstellung der Tragarmanordnung der erfindungsgemäßen Sitzanordnung gemäß der vierten Ausführungsform;
- Fig. 11: eine schematische perspektivische Darstellung der Tragarmanordnung der erfindungsgemäßen Sitzanordnung gemäß der vierten Ausführungsform; und
- Fig. 12: eine schematische perspektivische Explosions-darstellung der Tragarmanordnung der erfindungsgemäßen Sitzanordnung gemäß der vierten Ausführungsform.

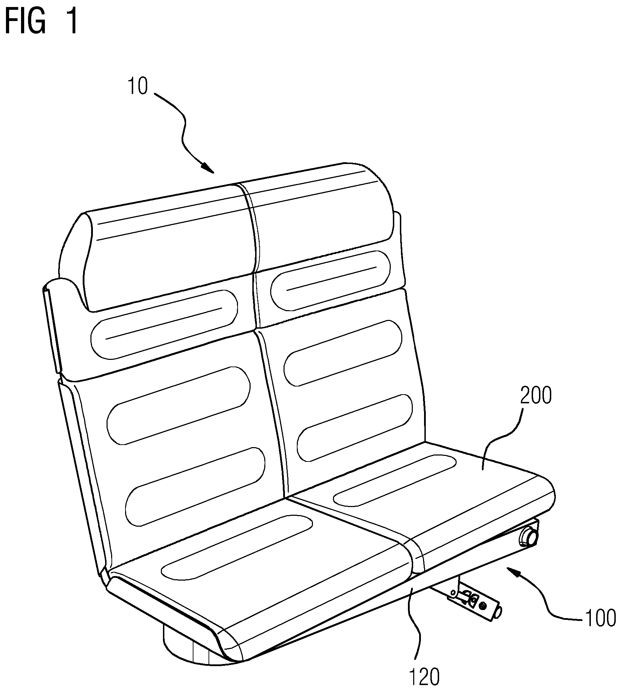

Fig. 1 zeigt eine schematische perspektivische Darstellung einer erfindungsgemäßen Sitzanordnung 10 gemäß der ersten Ausführungsform.

Bei der Sitzanordnung 10 handelt es sich insbesondere um eine Sitzanordnung für ein Fahrzeug des Personentransports.

Ferner betrifft das Ausführungsbeispiel ein Fahrzeug des Personentransports (nicht dargestellt), umfassend zumindest eine solche Sitzanordnung 10.

Das Fahrzeug ist insbesondere ein spurgeführtes Fahrzeug, vorzugsweise ein Schienenfahrzeug.

Die Sitzanordnung 10 umfasst zumindest einen Sitz 200 und zumindest eine Tragarmanordnung 100.

Gemäß der in Fig. 1 gezeigten ersten Ausführungsform umfasst die Sitzanordnung 10 zwei Sitze 200, die Doppelsitzanordnung angeordnet sind.

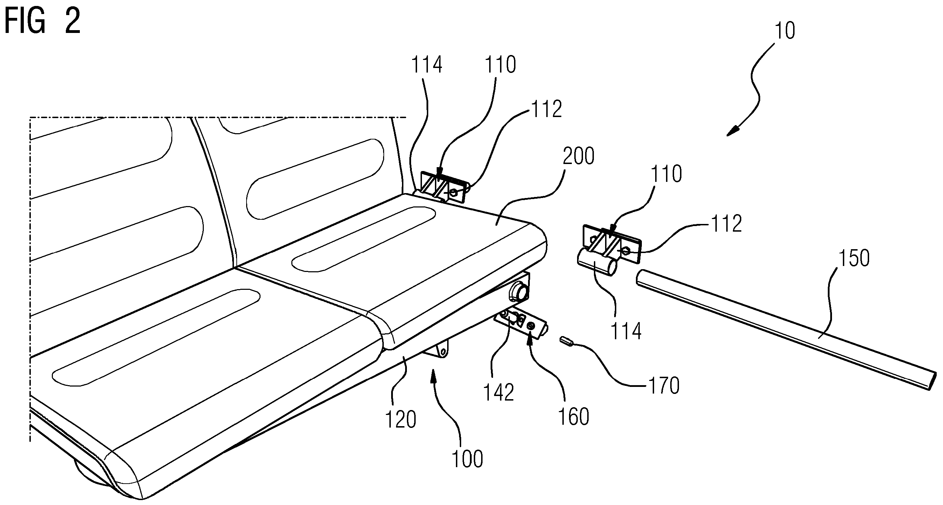

Fig. 2 zeigt eine schematische perspektivische Explosions-darstellung der erfindungsgemäßen Sitzanordnung 10 gemäß der ersten Ausführungsform.

Fig. 2 zeigt somit eine schematische Darstellung der Sitzanordnung 10 in nicht montiertem Zustand und dient dem besseren Verständnis.

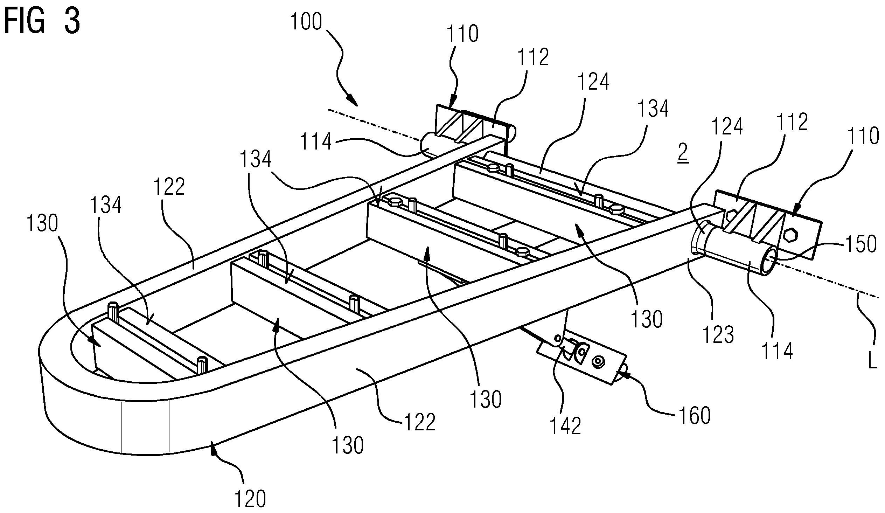

Fig. 3 zeigt eine schematische perspektivische Darstellung einer Tragarmanordnung 100 einer erfindungsgemäßen Sitzanordnung 10 gemäß der ersten Ausführungsform.

Fig. 3 zeigt somit eine schematische Darstellung der Tragarmanordnung 100 in montiertem Zustand und dient dem besseren Verständnis.

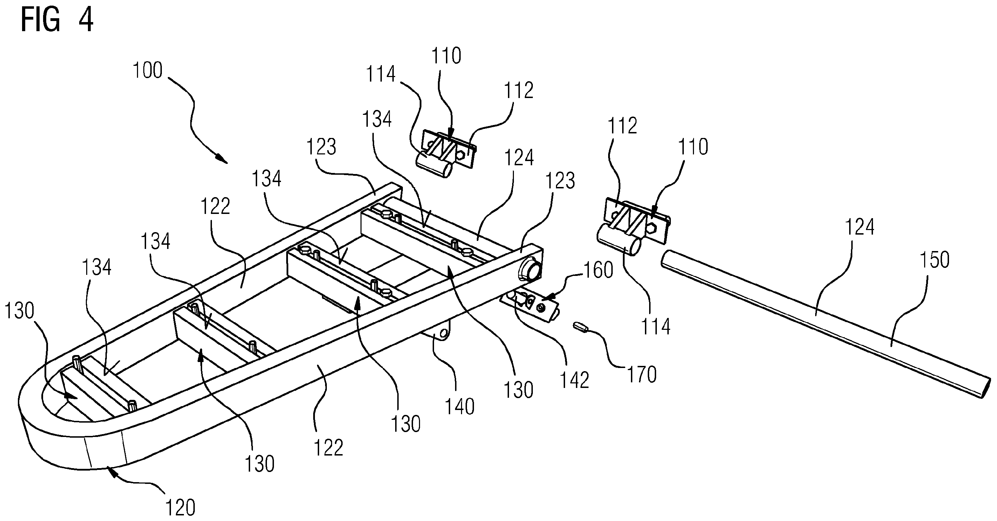

Fig. 4 zeigt eine schematische perspektivische Explosions-darstellung der Tragarmanordnung 100 der erfindungsgemäßen Sitzanordnung 10 gemäß der ersten Ausführungsform.

Die Fig. 4 zeigt somit eine schematische Darstellung der Tragarmanordnung 100 in nicht montiertem Zustand und dient dem besseren Verständnis.

Die Tragarmanordnung 100 weist zumindest eine erste Wandhalterung 110 und zumindest einen Tragarm 120 auf.

Die zumindest eine erste Wandhalterung 110 weist ein Anbindungselement 112 zur Anbindung der ersten Wandhalterung 110 an einer Wand 2 des Fahrzeugs auf.

Das Anbindungselement 112 ist beispielsweise derart ausgebildet, dass dieses in einer Schiene, insbesondere in einer C-Schiene, der Wand 2 des Fahrzeugs, montiert werden kann. Insbesondere kann vorgesehen sein, dass die endgültige Montageposition des Anbindungselements 112 entlang dieser Schiene einstellbar ist und das Anbindungselement 112 erst in seiner endgültigen Position fixierbar ist.

Die zumindest eine erste Wandhalterung 110 und der Tragarm 120 sind über eine zumindest eine Achse 150 lösbar miteinander verbunden.

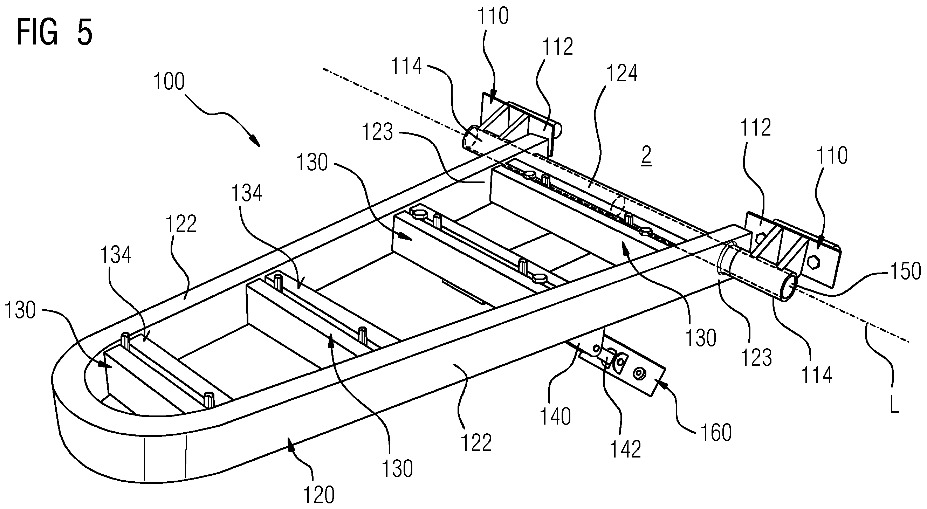

Fig. 5 zeigt eine schematische perspektivische Darstellung der erfindungsgemäßen Sitzanordnung 10 gemäß der ersten Ausführungsform. In Fig. 5 ist die Achse montiert und hervorgehoben.

Die zumindest eine erste Wandhalterung 110 weist zumindest eine erste Buchse 114 auf, welche durch die Achse 150 über die zweite Buchse 124 mit dem Tragarm 120 verbunden ist.

Es handelt sich vorzugsweise bei der Verbindung von Wandhalterung 110, mit dem Tragarm 120 über die Ache 150 durch die Buchsen 114, 125 verbunden sind, um eine Rohr-in-Rohr-Anordnung.

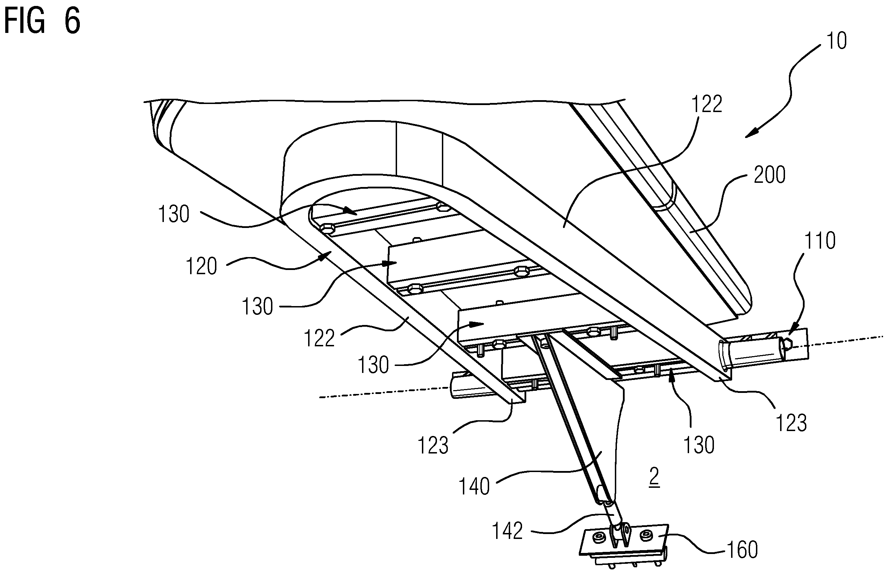

Fig. 6 zeigt eine schematische perspektivische Darstellung der erfindungsgemäßen Sitzanordnung 10 gemäß der ersten Ausführungsform.

Hierbei ist der die Sitzanordnung 10 in montiertem Zustand von in einer Ansicht von unten gezeigt.

Wie aus den Fig. 2-6 erkennbar ist, weist der Tragarm 120 zumindest eine zweite Buchse 124 auf, welche über die zumindest eine Achse 150 mit der ersten Wandhalterung 110 verbunden ist.

Die zweite Buchse 124 ist mit dem Tragarm 100 verbunden und gemäß der ersten Ausführungsform in den Tragarm integriert.

Es ist möglich, dass die zweite Buchse und der Tragarm 120 stoffschlüssig miteinander verbunden sind, bspw. durch Verschweißen.

Die zumindest eine erste Buchse 114 und/oder die zumindest eine zweite Buchse 124 sind auf der zumindest einen Achse 150 gelagert und der Tragarm 120 ist um die zumindest eine Achse 150 schwenkbar ausgebildet.

Die Sitzanordnung 10 weist zumindest ein Sitzbefestigungselement 130 auf, an dem der zumindest eine Sitz 200 befestigt ist. Das zumindest eine Sitzbefestigungselement 130 ist mit dem Tragarm 120 verbunden.

Das Sitzbefestigungselement 130 weist vorzugsweise einen Spalt auf, in welchen Schrauben eingeführt werden können und wobei die Schrauben entlang des Spaltes verschiebbar bzw. justierbar einführbar und montierbar sind

Das zumindest eine Sitzbefestigungselement 130 weist zumindest einen Auflageabschnitt 134 auf, an welchem der zumindest eine Sitz 200 befestigt ist.

Der zumindest eine Auflageabschnitt 134 erstreckt sich parallel zu der zumindest einen Achse 150.

Die Tragarmanordnung 100 weist ein Stützelement 140 zum Stützen des Tragarms 120 auf.

Das Stützelement 140 weist eine zweite Wandhalterung 160 auf. Die zweite Wandhalterung 160 ist vorzugsweise über einen Bolzen 170 mit dem Stützelement 140 verbunden.

Die Tragarmanordnung 100 weist ein Einstellelement 142 auf, wobei das Einstellelement 142 zwischen dem Stützelement 140 und der zweiten Wandhalterung 160 angeordnet ist.

Das Einstellelement 142 ist zur Einstellung einer Stützlänge zwischen dem Tragarm 120 und der zweiten Wandhalterung 160 ausgebildet.

Der Tragarm 120 ist im Wesentlichen U-förmig ausgebildet und weist zwei Schenkel 122 auf, wobei freie Enden 123 der Schenkel 122 in einem Winkel von 0 bis 25°, vorzugsweise von 0 bis 15°, von einer Achsnormalen der Achse 150 in Richtung des Tragarms 120 abweichen.

Gemäß der ersten Ausführungsform ist die Tragarmanordnung 100 derart ausgebildet, dass die zumindest eine erste Wandhalterung 110 den Tragarm 120 und die zumindest eine zweite Buchse 124 in Achsrichtung der Achse 150 gesehen, proximal oder anders ausgedrückt, außerhalb der Schenkel, angeordnet ist.

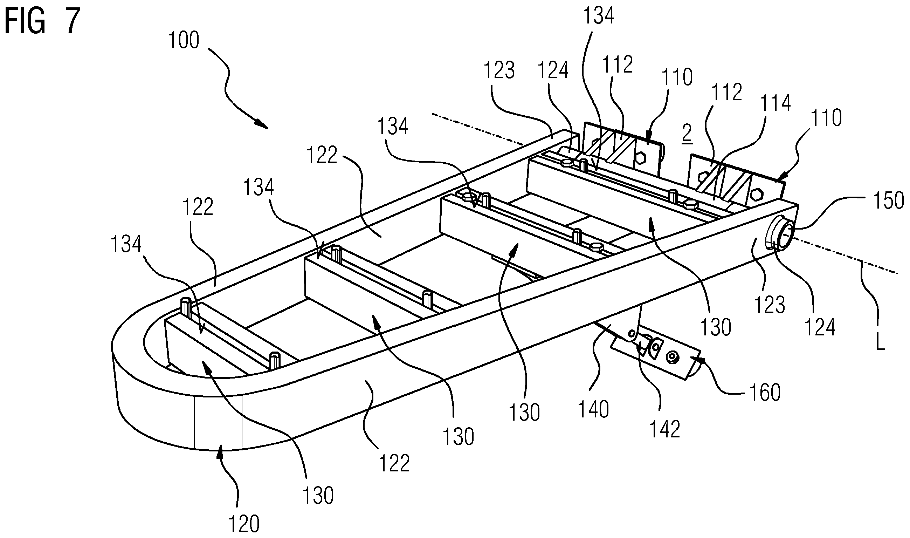

Fig. 7 zeigt eine schematische, perspektivische Darstellung einer Tragarmanordnung 100 einer erfindungsgemäßen Sitzanordnung 10 gemäß einer zweiten Ausführungsform.

Die Sitzanordnung 10 gemäß der zweiten Ausführungsform, basiert auf der Sitzanordnung 10 gemäß der ersten Ausführungsform, wobei nachfolgend lediglich die Unterschiede zwischen der zweiten Ausführungsform und der ersten Ausführungsform beschrieben sind.

Gemäß der zweiten Ausführungsform ist die Tragarmanordnung 100 derart ausgebildet, dass die zumindest eine erste Wandhalterung 110 in Achsrichtung der Achse 150 gesehen, zwischen den Schenkeln 123 des Tragarms 120 angeordnet ist.

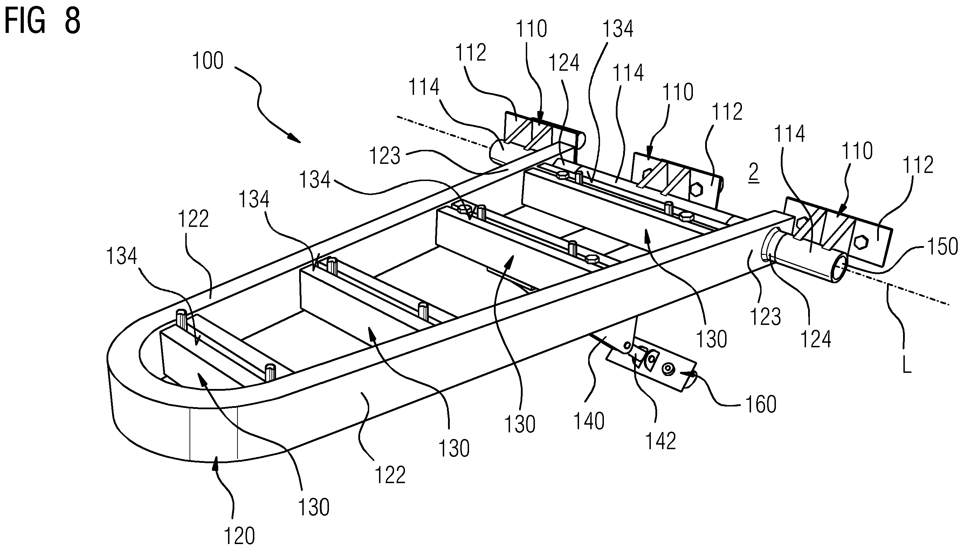

Fig. 8 zeigt eine schematische, perspektivische Darstellung einer Tragarmanordnung 100 einer erfindungsgemäßen Sitzanordnung 10 gemäß einer dritten Ausführungsform.

Die Sitzanordnung 10 gemäß der dritten Ausführungsform, basiert auf der Sitzanordnung 10 gemäß der ersten Ausführungsform, wobei nachfolgend lediglich die Unterschiede zwischen der dritten Ausführungsform und der ersten Ausführungsform beschrieben sind.

Gemäß der dritten Ausführungsform ist die Tragarmanordnung 100 derart ausgebildet, dass die zumindest eine erste Wandhalterung 110 in Achsrichtung der Achse 150 gesehen, zwischen den Schenkeln 123 des Tragarms 120 und zusätzlich zumindest je eine erste Wandhalterung 110 links und rechts außerhalb der Schenkel 123, angeordnet ist.

Vorzugsweise wird der Tragarm 120 als gebogenes Aluminiumrahmengerüst bereitgestellt, welches mit Rechteckprofilen versteift ist.

In Ausgestaltung kann vorgesehen sein, dass diese Rechteckprofile paarweise derart verschweißt sind, dass ein Spalt entsteht, in den Schrauben wie in einer Doppel-C-Schiene zu beiden Richtungen; eingefädelt werden können. Diese Rechteckprofile haben eine etwas niedrigere Höhe als das gebogene Hauptrahmenprofil des Tragarms 120, dadurch ragen die Schraubenköpfe nicht in die Anschraubebenen hinein.

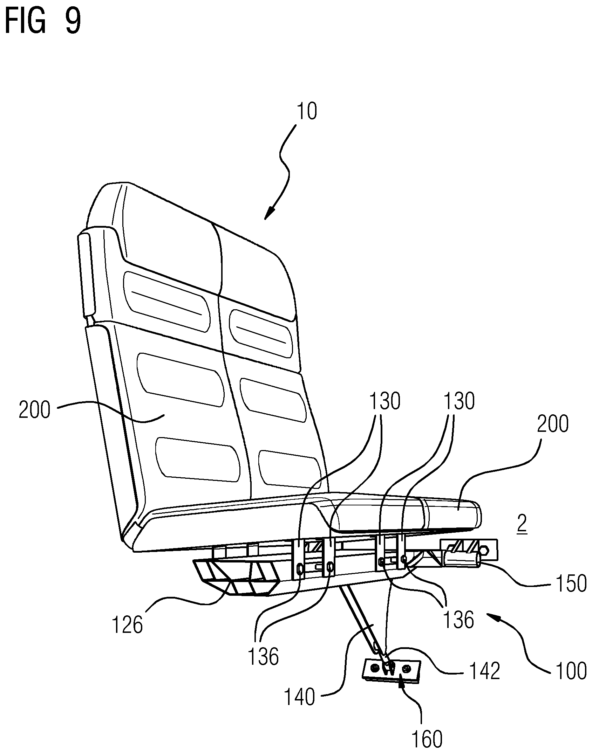

Fig. 9 zeigt eine schematische, perspektivische Darstellung einer erfindungsgemäßen Sitzanordnung 10 gemäß einer vierten Ausführungsform.

Die Sitzanordnung 10 gemäß der vierten Ausführungsform, basiert auf der Sitzanordnung 10 gemäß der ersten Ausführungsform, wobei nachfolgend lediglich die Unterschiede zwischen der vierten Ausführungsform und der ersten Ausführungsform beschrieben sind.

Gemäß der Sitzanordnung 10 gemäß der vierten Ausführungsform umfasst der Tragarm 120 die zumindest eine Achse 150.

Vorzugsweise ist die Achse 150 in den Tragarm integriert. Es kann vorgesehen sein, dass die Achse 150 beidseitig aus dem Tragarm 120 hervorsteht.

Es kann aber auch vorgesehen sein, dass die Achse 150 lösbar eingeschoben ist und in einem herausgezogenen Zustand und der Tragarm 120 mitsamt dem Sitz 200 dazwischen entfernt werden kann, ohne die zumindest eine erste Wandhalterung 110 vorher verschieben zu müssen.

Gemäß der vierten Ausführungsform der Sitzanordnung 10 ist der Tragarm 120 an einer der Wand 2 zugewandten Seite, hammerförmig ausgebildet.

Gemäß der vierten Ausführungsform ist die Tragarmanordnung 100 derart ausgebildet, dass die zumindest eine erste Wandhalterung 110 den Tragarm 120 in Achsrichtung der Achse 150 gesehen, proximal angeordnet ist.

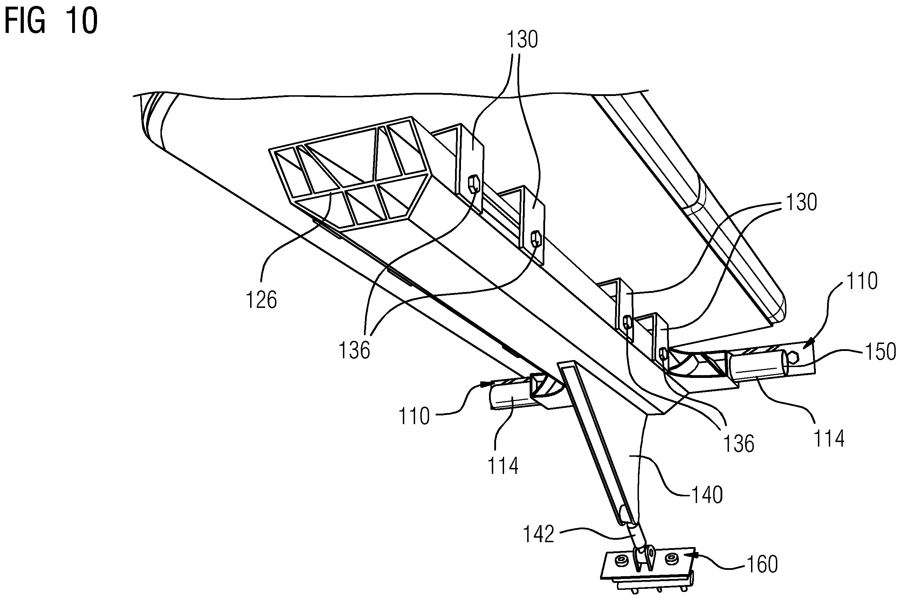

Fig. 10 zeigt eine schematische, perspektivische Darstellung der Tragarmanordnung 100 der erfindungsgemäßen Sitzanordnung 10 gemäß der vierten Ausführungsform.

Wie aus der Fig. 10 ersichtlich, weist der Tragarm 120 einen sechseckigen Querschnitt auf. Ferner weist der Tragarm 120 innere Stützwände 126 auf. Es kann vorgesehen sein, dass die Stützwände 126 als Stützverrippung ausgebildet sind.

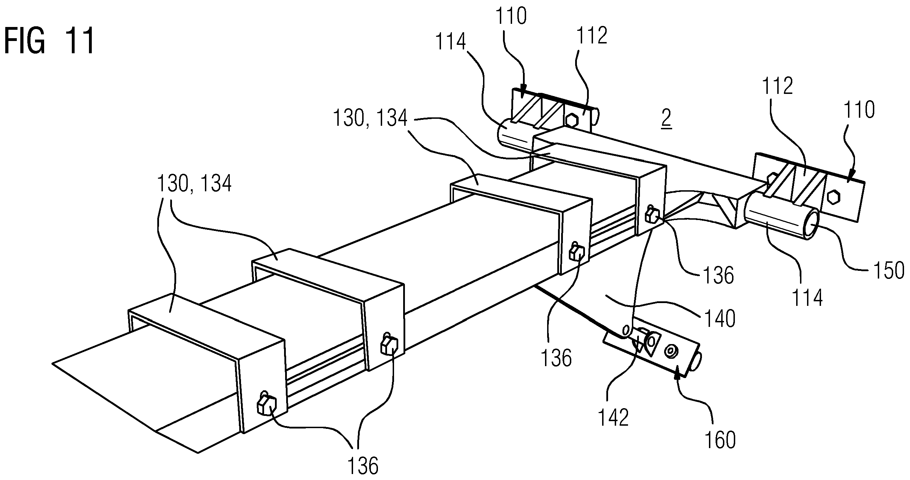

Fig. 11 zeigt eine schematische, perspektivische Darstellung der Tragarmanordnung 100 der erfindungsgemäßen Sitzanordnung 10 gemäß der vierten Ausführungsform.

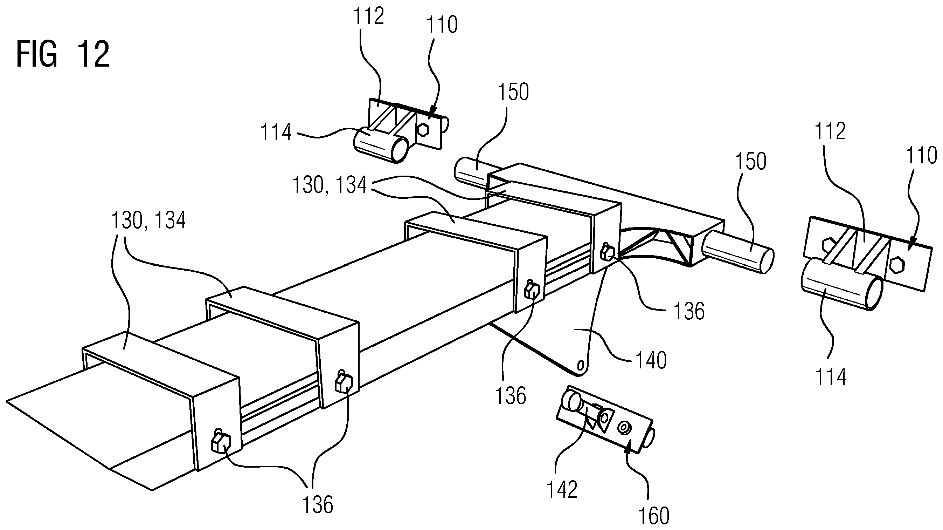

Fig. 12 zeigt eine schematische, perspektivische Explosionsdarstellung der Tragarmanordnung 100 der erfindungsgemäßen Sitzanordnung 10 gemäß der vierten Ausführungsform.

Der Auflageabschnitt 134 weist vorzugsweise eine Einstellvorrichtung 136 zur Einstellung eines Abstands zwischen dem Tragarm 120 und dem zumindest einen Sitz 200 auf.

In Bezug auf die vorstehend beschriebene Sitzanordnung 10 kann vorgesehen sein, vorgesehen, dass es zwei Formen der Demontage der Sitzanordnung 10 in Bezug auf die in Fig. 1 bis 12 beschriebenen Ausführungsformen gibt:
Einmal durch Verschieben der Wandhalterung(en) 110, oder aber es wird die Achse 150 (als ein separates Rohr) entfernt, welche bei der Montage durch die beiden ersten Buchsen 114 an den ersten Wandhalterungen 110 und einen zweite Buchse 124 am Tragarm 120 geschoben wurde. Beim Herausziehen dieser Achse 150 ist der Tragarm 120 frei und kann ohne Verschieben der Wandhalterungen 110 entfernt werden. Dies hat den großen Vorteil, dass keine Verschraubungen gelöst werden müssen, wie sonst üblich.

Dieses Prinzip kann Anwendung finden, wenn die ersten Wandhalterungen 110 innerhalb der Schenkel 122 des Tragarm 120 angeordnet sind oder, wenn diese zwecks größeren Hebelarms proximal am Tragarm 120 platziert sind. Es kann noch zwecks zusätzlicher Stabilisierung eine erste Wandhalterung zwischen den Schenkeln angeordnet ist U-Profil gesetzt werden.

Die vorstehende Offenbarung gilt gleichermaßen für ein Fahrzeug des Personentransports, vorzugsweise ein spurgeführtes Fahrzeug, insbesondere ein Schienenfahrzeug, umfassend zumindest eine, wie vorstehend beschrieben, ausgeführte Sitzanordnung. Gleichsam kann sich die vorstehende Offenbarung auch auf einen einzelnen Wagenkasten eines spurgeführten Fahrzeugs beziehen.

Die vierte Ausführungsform stellt vorzugsweise ein Konzept dar, bei dem anstelle eines Alu-Profilrahmens ein Aluminium-Strangpressprofil als Tragarm 120 mit derart vorkonzipierten Kammern, welche partiell aufgefräst, als C-Schienen nutzbar sind. Diese dienen zur Sitzanbindung auf dem Tragarm 120 inkl. der Option einer Höhenverstellbarkeit, sowie einer Anbindung einer oder mehrerer Stützstreben.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Sitzanordnung (10), insbesondere für ein Fahrzeug des Personentransports (1), umfassend zumindest einen Sitz (200) und eine Tragarmanordnung (100),
wobei die Tragarmanordnung (100) zumindest eine erste Wandhalterung (110) und zumindest einen Tragarm (120) aufweist, wobei die zumindest eine erste Wandhalterung (110) ein Anbindungselement (112) zur Anbindung der ersten Wandhalterung (110) an einer Wand (2) aufweist,
**dadurch gekennzeichnet, dass**
die zumindest eine erste Wandhalterung (110) und der Tragarm (120) über zumindest eine Achse (150) miteinander verbunden sind.

2. Sitzanordnung (10) nach Anspruch 1,
**dadurch gekennzeichnet, dass**
die zumindest eine erste Wandhalterung (110) zumindest eine erste Buchse (114) aufweist, welche über die Achse (150) mit dem Tragarm (120) verbunden ist.

3. Sitzanordnung (10) nach Anspruch 1 oder 2,
**dadurch gekennzeichnet, dass**
der Tragarm (120) zumindest eine zweite Buchse (124) aufweist, welche über die zumindest eine Achse (150) mit der ersten Wandhalterung (110) verbunden ist.

4. Sitzanordnung (10) nach Anspruch 2 oder 3,
**dadurch gekennzeichnet, dass**
die zumindest eine erste Buchse (114) und/oder die zumindest eine zweite Buchse (124) auf der zumindest einen Achse (150) gelagert sind und der Tragarm (120) um die zumindest eine Achse (150) schwenkbar ausgebildet ist.

5. Sitzanordnung (10) nach einem der Ansprüche 1 oder 2,
**dadurch gekennzeichnet, dass**
der Tragarm (120) die zumindest eine Achse (150) aufweist.

6. Sitzanordnung (10) nach einem der vorhergehenden Ansprüche,
**dadurch gekennzeichnet, dass**
die Sitzanordnung (10) zumindest ein Sitzbefestigungselement (130) aufweist, an dem der zumindest eine Sitz (200) befestigt ist, wobei das zumindest eine Sitzbefestigungselement (130), mit dem Tragarm (120) verbunden ist.

7. Sitzanordnung (10) nach Anspruch 6,
**dadurch gekennzeichnet, dass**
das zumindest eine Sitzbefestigungselement (130) zumindest einen Auflageabschnitt (134) aufweist, an welchem der zumindest eine Sitz (200) befestigt ist und der Auflageabschnitt (134) vorzugsweise eine Einstellvorrichtung (136) aufweist zur Einstellung eines Abstands zwischen dem Tragarm (120) und dem zumindest einen Sitz (200).

8. Sitzanordnung (10) nach Anspruch 7,
**dadurch gekennzeichnet, dass**
sich der zumindest eine Auflageabschnitt (134) parallel zu der zumindest einen Achse (150) erstreckt.

9. Sitzanordnung (10) nach einem der vorhergehenden Ansprüche,
**dadurch gekennzeichnet, dass**
die Tragarmanordnung (100) ein Stützelement (140) zum Stützen des Tragarms (120) aufweist, wobei das Stützelement (140) eine zweite Wandhalterung (160) aufweist und die zweite Wandhalterung (160) vorzugsweise über einen Bolzen (170) mit dem Stützelement (140) verbunden ist.

10. Sitzanordnung (10) nach Anspruch 9,
**dadurch gekennzeichnet, dass**
die Tragarmanordnung (100) ein Einstellelement (142) aufweist, wobei das Einstellelement (142) zwischen dem Stützelement (140) und der zweiten Wandhalterung (160) angeordnet ist und vorzugsweise das Einstellelement (142) zu Einstellung einer Stützlänge zwischen dem Tragarm (120) und der zweiten Wandhalterung (160) ausgebildet ist.

11. Sitzanordnung (10) nach einem der vorhergehenden Ansprüche,
**dadurch gekennzeichnet, dass**
der der Tragarm (120) im Wesentlichen U-förmig ausgebildet ist und zwei Schenkel (122) aufweist, wobei freien Enden (123) der Schenkel (122) in einem Winkel von 0 bis 25°, vorzugsweise von 0 bis 15°, von einer Achsnormalen der Achse (150) in Richtung des Tragarms (120) abweichen.

12. Sitzanordnung (10) nach einem der vorhergehenden Ansprüche,
**dadurch gekennzeichnet, dass**
der Tragarm (120) einen sechseckigen Querschnitt aufweist und/oder der Tragarm (120) innere Stützwände (126) aufweist.

13. Sitzanordnung (10) nach einem der vorhergehenden Ansprüche,
**dadurch gekennzeichnet, dass** die Sitzanordnung (10) derart ausgebildet ist, dass
durch Demontage der Achse (150), der Tragarm (120) der Sitzanordnung (10) von der Wand (2) lösbar ist.

14. Fahrzeug des Personentransports (1),
umfassend zumindest eine Sitzanordnung (10) nach einem der Ansprüche 1 bis 13.

15. Fahrzeug des Personentransport (1),
**dadurch gekennzeichnet, dass**
das Fahrzeug ein spurgeführtes Fahrzeug ist, vorzugsweise ein Schienenfahrzeug ist.
